# EUROPÄISCHE PATENTANMELDUNG

(11) **EP 2 077 208 A2**
(43) Veröffentlichungstag der Anmeldung: **08.07.2009**
(21) Anmeldenummer: 08022371.2
(22) Anmeldetag: 23.12.2008
(51) Int. Cl.: B60R 21/215

(54) **Verfahren zur Herstellung eines Fahrzeuginnenausstattungsteils sowie ein Fahrzeuginnenausstattungsteil**

(30) Priorität: 28.12.2007 DE 102007063358; 22.07.2008 DE 102008034274
(71) Anmelder: Johnson Controls Interiors GmbH & Co. KG, 47929 Grefrath (DE)
(72) Erfinder: Harnisch, Hartmut, 47929 Grefrath (DE); Renner, Dieter, 47906 Kempen (DE)
(74) Vertreter: Wolff, Felix

(57) **Zusammenfassung**

Die Erfindung betrifft ein Verfahren zur Herstellung eines Fahrzeuginnenausstattungsteils mit einer Sollbruchstelle, insbesondere für eine Airbag-Austrittsöffnung sowie ein Fahrzeuginnenausstattungsteil für ein Fahrzeug.

## Beschreibung

Die Erfindung betrifft ein Verfahren zur Herstellung eines Fahrzeuginnenausstattungsteils mit einer Sollbruchstelle, insbesondere für eine Airbag-Austrittsöffnung sowie ein Fahrzeuginnenausstattungsteil für ein Fahrzeug.

Beispielweise aus der DE 103 50 220 A1 ist bekannt, Sollbruchstelle durch die Anwendung eines Lasers in Ausstattungsteile eines Kraftfahrzeuges einzubringen. In der DE 10 2005 055 553 A1 sowie in der DE 103 52 524 A1 ist ein derartiges Verfahren für ein Lederdekor beschrieben. Insbesondere bei der Bearbeitung von Leder können dabei für das menschliche Auge sichtbare unerwünschte Wülste entstehen.

Es war deshalb die Aufgabe der vorliegenden Erfindung ein Verfahren zur Verfügung zu stellen, bei dem die negativen optischen Auswirkungen auf das Leder nicht auftreten.

Gelöst wird die Aufgabe mit einem Verfahren zur Herstellung eines Fahrzeuginnenausstattungsteils mit einer Dekorschicht aus Leder mit einer Dekorseite und einer Unterseite, wobei in die Unterseite mit einem Laser eine Schwächungslinie eingebracht und die Dekorschicht mechanisch behandelt wird.

Es war für den Fachmann überaus erstaunlich und nicht zu erwarten, dass bei dem mit dem erfindungsgemäßen Verfahren behandelten Leder die unerwünschten Wülste entlang der Schwächungslinie auch langzeitstabil nicht auftreten.

Bei dem erfindungsgemäßen Verfahren wird von der Unterseite, d. h. der unsichtbaren Seite, her eine Schwächung in das Leder eingebracht. Diese Schwächung erfolgt mittels eines Lasers, der vorzugsweise diskrete Perforationslöcher in das Leder einbrennt.

Weiterhin erfindungsgemäß wird die Dekorschicht mechanisch behandelt.

Vorzugsweise wird die Dekorschicht dahingehend mechanisch behandelt, dass das Leder nach dem Lasern gespalten wird. Vorzugsweise wird beim Spalten von der Unterseite eine so große Schicht abgetragen, dass Verkrustungen, die sich innerhalb der Schwächungslinie bzw. der Perforationslöcher bilden, mit weggeschnitten werden.

Weiterhin bevorzugt, wird mechanische Energie in das Leder eingetragen. Dieser Eintrag von mechanischer Energie kann beispielsweise durch Kneten, Bürsten, Kratzen und/oder Walken erfolgen. Besonders bevorzugt führt der Eintrag von mechanischer Energie dazu, dass vorhandene Verkrustungen, die insbesondere aus Eiweiß- und/oder Kollagen-Ablagerungen bestehen, zumindest teilweise besonders bevorzugt vollständig zerkleinert und damit oder dabei aus der Schwächungslinie bzw. den Perforationslöchem entfernt werden oder zu keiner nachträglichen Abzeichnung (Wulst) an der Dekorseite des Leders führen.

Vorzugsweise erfolgt die mechanische Behandlung beim und/oder nach dem Lasern.

Als Laser kann jeder der Fachmann geläufige Laser verwendet werden. Vorzugsweise kommt jedoch ein Karbondioxid- oder ein Nd:YAG-Laser (Neodymdotierter Yttrium-Aluminium-Granat-Laser) zum Einsatz.

In einer bevorzugten Ausführungsform der vorliegenden Erfindung werden 40 bis 70 %, bevorzugt 55 bis 65% der ursprünglichen Dicke des Leders von dem Laser im Bereich der Schwächungslinie abgetragen. Die Tiefe der Perforationslöcher bzw. der Schwächungslinie wird vorzugsweise mittels eines Strahlungssensors (Ultraviolett bis Infrarot) überwacht, der sich gegenüber dem Laser auf der Dekorseite befindet.

Vorzugsweise wird das mit einer Schwächungslinie versehene Leder anschließend auf eine Stützstruktur aufgebracht, insbesondere mit einer Verbindungsschicht auf eine Stützstruktur aufgeklebt. Bei der Verbindungsschicht kann es sich um einen Kleber oder um eine geschäumte Schicht handeln. Als Stützstruktur kann aber auch eine Schaumschicht selbst vorgesehen sein.

Das erfindungsgemäße Verfahren eignet sich insbesondere zur Herstellung von Fahrzeuginnenausstattungsteilen, insbesondere Fahrzeuginnenausstattungsteile, die mit einem Airbag versehen sind. Diese Fahrzeuginnenausstattungsteile müssen eine Schwächungslinie aufweisen, entlang derer sie bei einer Aktivierung des Airbags aufplatzen.

Vorzugsweise weist dieses Fahrzeuginnenausstattungsteil entlang der Schwächung keine Wulst auf.

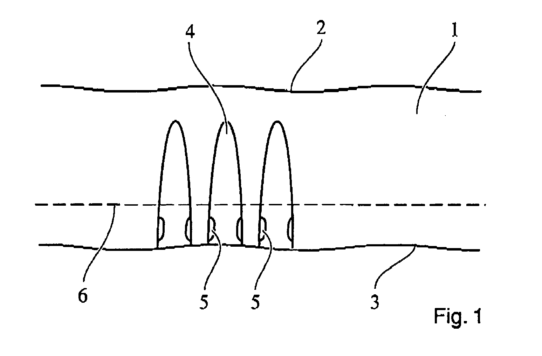

Im Folgenden wird die Erfindung anhand der einzigen Figur 1 erläutert. Diese Figur 1 zeigt eine Lederdekorhaut 1 mit einer Oberseite(Dekorseite) 2 und einer Unterseite 3. Die Oberseite ist für den Fahrzeuginsassen sichtbar. Mit der Unterseite 3 wird die Lederschicht auf eine Stützstruktur aufgebracht. Die Lederschicht 1 weist eine Schwächungslinie auf, die in dem vorliegenden Fall durch Perforationslöcher 4 gebildet ist, die jeweils einen gewissen Abstand zueinander aufweisen. Das Lasern der Perforationslöcher erfolgt mit einem Nd:YAG-Laser. Beim Lasern entstehen in dem der Unterseite 3 zugewandten Bereich der Löcher 4 Ablagerungen 5. Diese Ablagerungen 5 werden erfindungsgemäß durch eine mechanische Behandlung zumindest teilweise entfernt. Diese mechanische Behandlung kann dadurch erfolgen, dass die Lederschicht 1 entlang des Schnittes 6 gespalten wird, so dass die Ablagerungen 5 mit abgeschnitten werden und/oder die mechanische Behandlung kann durch Eintrag von mechanischer Energie erfolgen, durch die die Ablagerung 5 zumindest teilweise zerkleinert werden und/oder durch die sie zumindest teilweise aus den Perforationslöchern 5 abplatzen.

Durch die zumindest teilweise Entfernung der Verkrustung 5 ist sichergestellt, dass sich langzeitstabil keine Wulst entlang der Schwächungslinie auf der Oberseite des Leders bildet.

### Bezugszeichenliste:

1. Dekorschicht, Lederschicht
2. A-Seite, Dekorseite
3. B-Seite, Unterseite
4. Perforation, Perforationslöcher, Schwächungslinie
5. Verkrustung, Ablagerung
6. Schnitt

## Patentansprüche

1. Verfahren zur Herstellung eines Fahrzeuginnenausstattungsteils mit einer Dekorschicht (1) aus Leder mit einer Dekorseite (2) und einer Unterseite (3), wobei in die Unterseite mit einem Laser eine Schwächungslinie (4) eingebracht wird, **dadurch gekennzeichnet, dass** die Dekorschicht mechanisch behandelt wird.

2. Verfahren nach Anspruch 1, **dadurch gekennzeichnet, dass** das Leder entlang des Schnitts (6) gespalten wird.

3. Verfahren nach einem der voranstehenden Ansprüche, **dadurch gekennzeichnet, dass** mechanische Energie in das Leder eingetragen wird.

4. Verfahren nach einem der voranstehenden Ansprüche, **dadurch gekennzeichnet, dass** Verkrustungen (5) entfernt werden.

5. Verfahren nach einem der voranstehenden Ansprüche, **dadurch gekennzeichnet, dass** die mechanische Behandlung beim und/oder nach dem Lasern erfolgt.

6. Verfahren nach einem der voranstehenden Ansprüche, **dadurch gekennzeichnet, dass** ein Carbondioxid- oder ein Nd:YAG-Laser verwendet wird.

7. Verfahren nach einem der voranstehenden Ansprüche, **dadurch gekennzeichnet, dass** 40-70 %, vorzugsweise 55-65% der ursprünglichen Dicke des Leders von dem Laser abgetragen werden.

8. Verfahren nach einem der voranstehenden Ansprüche, **dadurch gekennzeichnet, dass** Leder auf eine Stützstruktur aufgebracht wird.

9. Verfahren nach Anspruch 8, **dadurch gekennzeichnet, dass** zwischen Leder (1) und Stützstruktur eine Verbindungsschicht angeordnet ist.

10. Fahrzeuginnenausstattungsteil erhältlich mit einem Verfahren gemäß einem der Ansprüche 1 - 8.

11. Fahrzeuginneneusstattungsteil, **dadurch gekennzeichnet ,dass** das Leder (1) im Bereich der Schwächung keine Wulst aufweist.
